# EUROPÄISCHE PATENTSCHRIFT

(11) **EP 3 230 605 B1**
(45) Veröffentlichungstag und Bekanntmachung des Hinweises auf die Patenterteilung: **21.10.2020**
(21) Anmeldenummer: 15805501.2
(22) Anmeldetag: 08.12.2015
(51) Int. Cl.: F16B 33/00, F16B 35/04

(54) **SCHRAUBE, INSBESONDERE FÜR GEHÄUSE**
SCREW, IN PARTICULAR FOR HOUSINGS
VIS, NOTAMMENT POUR BOÎTIER

(30) Priorität: 12.12.2014 DE 102014118513
(43) Veröffentlichungstag der Anmeldung: 18.10.2017
(73) Patentinhaber: Eaton Intelligent Power Limited, Dublin 4 (IE)
(72) Erfinder: FREYERMUTH, Thomas, 53505 Kalenborn (DE)
(74) Vertreter: Eaton IP Group EMEA
(86) Internationale Anmeldenummer: PCT/EP2015/078948
(87) Internationale Veröffentlichungsnummer: WO 2016/091863

(56) Entgegenhaltungen:
- EP-A1- 0 824 173
- EP-A2- 1 859 957
- DE-A1-102006 020 630
- DE-U1-202004 004 893
- DE-U1-202009 003 471

## Beschreibung

Die Erfindung betrifft eine Schraube, die insbesondere für Gehäuse wie Schaltgerätegehäuse vorgesehen ist, die in Hygienebereichen eingesetzt werden.

Gehäuse für Schaltgeräte, insbesondere für Befehls- und Meldegeräte, bestehen meist aus Kunststoff und sind aus einem Ober- und Unterteil zusammengesetzt, die mit Befestigungsschrauben miteinander fest verbunden sind.

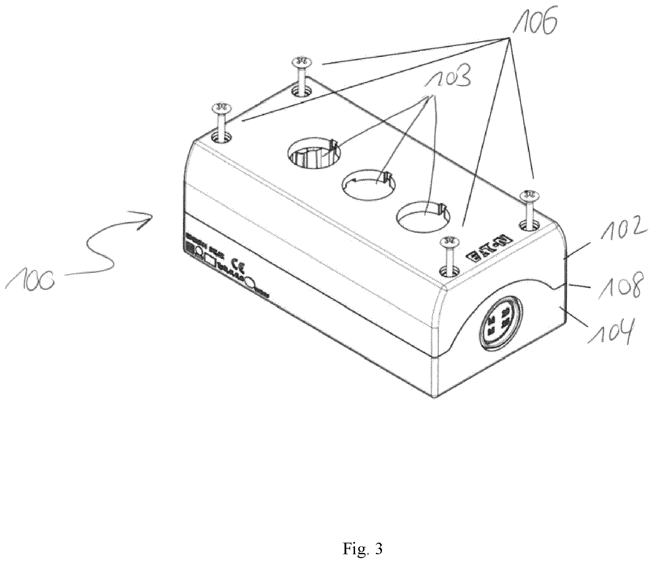

Fig. 3 zeigt ein Beispiel eines Schaltgerätegehäuses 100, das aus einem Oberteil 102 mit Öffnungen 103 für Bedien- und Schaltknöpfe und einem Unterteil 104 zusammengesetzt ist. Vier Schrauben 106 mit Linsen-Senkköpfen und Kunststoffgewinden befestigen das Oberteil 102 an dem Unterteil 104. Zum Erreichen einer möglichst hohen Schutzart kann zwischen Ober- und Unterteil eine Dichtung 108 vorgesehen sein. Das Dichtungsmaterial sitzt hierbei im Oberteil 102 und reicht mit seiner Form jeweils bis unter den Senkkopf der Schrauben 106, so dass im angezogenen Zustand der Schrauben 106 die Dichtung 108 die Schrauben 106 zum Gehäuse hin abdichtet.

Da der Schraubenkopf in der Senkung im Gehäuseoberteil 102 etwas vertieft sitzt und wegen der notwendigen Toleranz der Kopf zudem etwas kleiner als die Senkungsvertiefung des Oberteils 102 ist, entsteht zwischen dem Schraubenkopf und dem Gehäuseoberteil ein Spalt, in dem sich Ablagerungen wie Schmutz, Reinigungsmittel oder sogar Bakterien sammeln können. Ebenso können sich in den als Werkzeugschnittstelle dienenden Schlitzen in Schraubenköpfen solche Ablagerungen sammeln.

Vor allem beim Einsatz derartiger Schaltgerätegehäuse in Hygienebereichen, beispielsweise in Produktionsanlagen für Arznei- oder Lebensmittel, stellen solche Ablagerungen ein ernstes Problem dar, vor allem wenn sie sich lösen und in bearbeitete Lebens- oder Arzneimittel gelangen. Problematisch ist auch die Reinigung solcher Spalte oder Vertiefungen in Gehäusen.

Daher stellen Spalte und Vertiefungen in Gehäusen wie Schaltgerätegehäusen generell in Hygienebereichen eine ständige Kontaminationsgefahr für die unter Hygiene-Richtlinien hergestellten Produkte dar.

Aus der deutschen Offenlegungsschrift DE 10 2009 044 746 A1 ist eine Schraube mit einem zwischen einem Schraubenkopf und einem Gewindeabschnitt angeordneten zylinderförmigen Abschnitt bzw. Schaft bekannt, der einen größeren Durchmesser als der Gewindeabschnitt besitzt und etwa mittig eine Nut für zur Aufnahme einer Dichtung aufweist.

Die US-Offenlegungsschrift US 2007/0098520 A1 beschreibt einen Bolzen zum Einpressen in ein Metallbleck, der eine zwischen der Unterseite des Bolzenkopfes und einem ringförmigen Vorsprung angeordnete Nut aufweist. Zum Abdichten einer Bohrung, in die der Bolzen eingebracht werden soll, ist der Bolzenkopf mit einem Dichtmaterial wie beispielsweise Epoxidharz beschichtet. Es können auch Ausnehmungen an der Unterseite des Bolzenkopfes zur Aufnahme von Dichtmaterial vorgesehen sein.

Die deutsche Gebrauchsmusterschrift DE 20 2007 014 325 U1 beschreibt eine Montageanordnung mit einem elastischen Ring, beispielweise einem O-Ring, der in eine Ringnut eingesetzt wird, die in den Schaft einer Schraube der Anordnung etwa mittig in der Längserstreckung des Schafts eingebracht ist.

Die deutsche Offenlegungsschrift DE 10 2006 020 630 A1 offenbart eine Schraube zur Befestigung eines Kunststofffensterrahmens an einer Fensterlaibung aus Holz, die zur Verwendung bei der Altbausanierung zur Befestigung von neuen Fenstern, deren Kunststofffensterrauhmen einen Blendrahmen bildet, ausgebildet und vorgesehen ist. Der Schraubenkopf dieser Schraube bildet einen Anschlag, von dem mit einer Distanz beabstandet ein Anschlagring vorgesehen ist. Dadurch kann ein flaches Material wie beispielsweise eine Wandung eines Hohlprofils, aus dem ein Rahmenschenkel eines zu montierenden Fensterrahmens gefertigt ist, mit einem Bohrloch, durch das die Schraube hindurch gesteckt ist, zwischen dem Schraubenkopf und dem Anschlagring verrasten. Der Schraubenschaft zwischen Schraubenkopf und Anschlagring kann eine umlaufende Nut zur Aufnahme einer Dichtung aufweisen. Die Nut ist vorteilhaft an den Anschlagring angrenzend und vom Schraubenkopf beabstandet angeordnet, wodurch im Bereich der Beabstandung eine radiale Fixierung der Randbereiche des zugehörigen Bohrloches erreicht wird, so dass der Dichtring nicht oder nur unwesentlich ungleichmäßig verformt wird. Weitere Schrauben sind aus den deutschen Gebrauchsmusterschriften DE 20 2004 004 893 U1 und DE 20 2009 003 471 U1 und der europäischen Patentanmeldung EP1 859 957 A1 bekannt.

Aufgabe der vorliegenden Erfindung ist es nun, eine Schraube vorzuschlagen, die insbesondere für Gehäuse wie Schaltgerätegehäuse vorgesehen ist, die in Hygienebereichen eingesetzt werden, und die im verschraubten Zustand möglichst wenige Ablagerungsmöglichkeiten für Partikel bietet und zudem leicht zu reinigen ist.

Diese Aufgabe wird durch den Gegenstand des unabhängigen Anspruchs 1 gelöst. Weitere Ausgestaltungen der Erfindung sind Gegenstand der abhängigen Ansprüche.

Ein der vorliegenden Erfindung zugrunde liegender Gedanke besteht darin, eine Schraube mit einer weit oben, d.h. nahe am Schraubenkopf vorgesehenen Lagerungsmöglichkeit für eine Dichtung zu schaffen, so dass kein, oder zumindest nur ein sehr kleiner Spalt zwischen der Schraube, genauer gesagt dem Schraubenkopf und einem Gehäuseteil im eingeschraubten Zustand der Schraube entstehen kann. Dieser Gedanke wird erfindungsgemäß dadurch realisiert, dass ein Senkkopf einer Schraube derart modifiziert wird, dass zwischen dem Senkabschnitt und dem eigentlichen Schraubenkopfabschnitt eine zur Lagerung einer Dichtung dienende Nut eingebracht wird. Hierdurch wird die Dichtung im Vergleich zu den herkömmlichen Schraubentypen zur Gehäuseverschraubung vom Gewinde aus gesehen näher an die Spitze des Schraubenkopfes verlagert, so dass die Bildung eines vor allem tiefen Spaltes zwischen dem Schraubenkopf und einem Gehäuseteil vermieden wird, und damit die Gefahr von Ablagerungen in diesem tiefen Spalt verhindert, zumindest aber reduziert werden kann.

Eine Ausführungsform der Erfindung betrifft nun eine Schraube, insbesondere für Gehäuse, beispielsweise Schaltgerätegehäuse, die einen länglichen, zumindest teilweise mit einem Gewinde versehenen Abschnitt und einen Schraubenkopf aufweist. Erfindungsgemäß ist zwischen dem Schraubenkopf und dem länglichen Abschnitt ein konisch geformter Abschnitt angeordnet. Der konische Abschnitt schließt sich mit seiner Spitze an einem Ende des länglichen Abschnitts an und die Unterseite des Schraubenkopfes ist gegenüber der der Grundfläche des konischen Abschnitts angeordnet. Zwischen der Unterseite des Schraubenkopfes und der Grundfläche des konischen Abschnitts ist eine Nut zur Aufnahme einer Dichtung vorgesehen. Durch diese konstruktive Ausgestaltung der Schraube wird eine Dichtung möglichst nahe am Schraubenkopf, nämlich unmittelbar unter diesem platziert, so dass im eingeschraubten Zustand der Schraube nahezu unmittelbar unter dem Schraubenkopf eine Abdichtung zwischen der Unterseite des Schraubenkopfes und einen Gehäuse bewirkt wird und somit keine Spalte und Vertiefungen im Gehäuse für Ablagerungen verbleiben. Eine derartige Schraube kann so ausgestaltet sein, dass sie in den gleichen Bauraum wie eine herkömmliche bzw. Standard-Senkkopfschraube passt, aber die Vorteile keiner, oder zumindest geringerer Spaltbildung zwischen Schraubenkopf und Wandung des Einschraubloches, der damit eingehergehenden leichteren Reinigbarkeit und der Verwendung herkömmlicher Werkzeuge aufweist. Durch die näher als bei herkömmlichen Schrauben an der Schraubenkopf-Oberfläche liegenden Dichtung liegt letztere auch näher an einer Oberfläche des zu verschraubenden Teils, wodurch eine Spaltbildung zwischen Schraubenkopf und dem Teil, insbesondere seiner Oberfläche und der Wandung des Einschraubloches vermieden wird und sich eine nahezu geschlossene Oberfläche vom Schraubenkopf zur Oberfläche des zu verschraubenden Teils ergibt, weitgehend ohne Unterbrechung durch Spalte.

Als Dichtung kann beispielsweise ein O-Ring verwendet werden. Der O-Ring kann aus einem hygienegerechten Werkstoff wie beispielsweise einem Hygiene-konformen Elastomer gefertigt sein, wodurch eine Kontamination von zu verarbeiteten Stoffen durch den O-Ring selbst nicht auftreten kann.

Der Schraubenkopf und der konisch geformte Abschnitt können einstückig ausgebildet sein und aus einem Metall bestehen. Als Metall kann beispielsweise ein Edelstahl verwendet werden, der bestimmte Hygiene-Anforderungen erfüllt.

Die Schraube kann auch vollständig einstückig ausgebildet sein und aus einem Metall bestehen, insbesondere einem Lebensmittel-konformen Edelstahl bei einem Einsatz im Lebensmittelbereich.

Das Gewinde des länglichen Abschnitts kann eine für Kunststoff besonders geeignete Gewindeform aufweisen, insbesondere eine für das Einschrauben in Kunststoff besonders geeignete Gewindeform, die beispielsweise der gleichen Gewindeform entsprechen kann, die bei den heute schon verwendeten Standardschrauben für Kunststoff verwendet wird. So ist bei Kunststoff-Gehäusen mit Standard-Einschraubbohrungen keine Änderung notwendig und die erfindungsgemäße Schraube kann anstelle einer herkömmlichen Schraube eingesetzt werden.

Der Schraubenkopf kann als Außen-Mehrkantkopf, insbesondere als Außen-Sechskantkopf, mit ausschließlich abgerundeten Kanten und einer gewölbten Kopfoberfläche ausgebildet sein. Hierdurch können weitere Stellen für unerwünschte Ansammlungen von Partikeln wie beispielsweise bei Schraubenköpfen mit Schlitzen vermieden werden. Außerdem kann vom Schraubenkopf zur Oberfläche eines zu verschraubenden Teils eine Oberfläche nahezu ohne scharfe Kanten erhalten werden, wodurch Verunreinigungen von zu verarbeitenden Stoffen, mit welchen der Schraubenkopf in Berührung kommen kann, vermieden werden können.

Die Nut kann derart bemessen sein, dass höchstens ein Viertel der Oberfläche der aufzunehmenden Dichtung freiliegt. Dadurch wird eine möglichst geringe Angriffsfläche für Fremdstoffe wie Reinigungsmittel oder Umwelteinflüsse geboten, welche die Dichtung beeinträchtigen, beispielsweise zersetzen könnten.

Die Dimensionierung und Ausformung der Nut können derart an eine aufzunehmende Dichtung angepasst sein, dass abhängig von der Härte des Dichtungsmaterials der Kontaktdruck, der bei der in eine Schraubenöffnung eingeschraubten Schraube auf die Dichtung ausgeübt wird, die Dichtung nur so stark komprimiert, dass bei einer vorgegebenen Dichtwirkung keine Schädigung der Dichtung erfolgt.

Der konisch geformte Abschnitt kann einen Öffnungswinkel von ca. 90° besitzen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 drei verschiedene Ansichten eines Ausführungsbeispiel einer Schraube für ein Schaltgerätegehäuse gemäß der Erfindung;
Fig. 2 eine Schnittdarstellung der Schraube von Fig. 1 im eingeschraubten Zustand mit einer Detailansicht der O-Ring-Dichtung der Schraube; und
Fig. 3 ein Schaltgerätegehäuse mit einer Verschraubung mit herkömmlichen Senkkopfschrauben.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

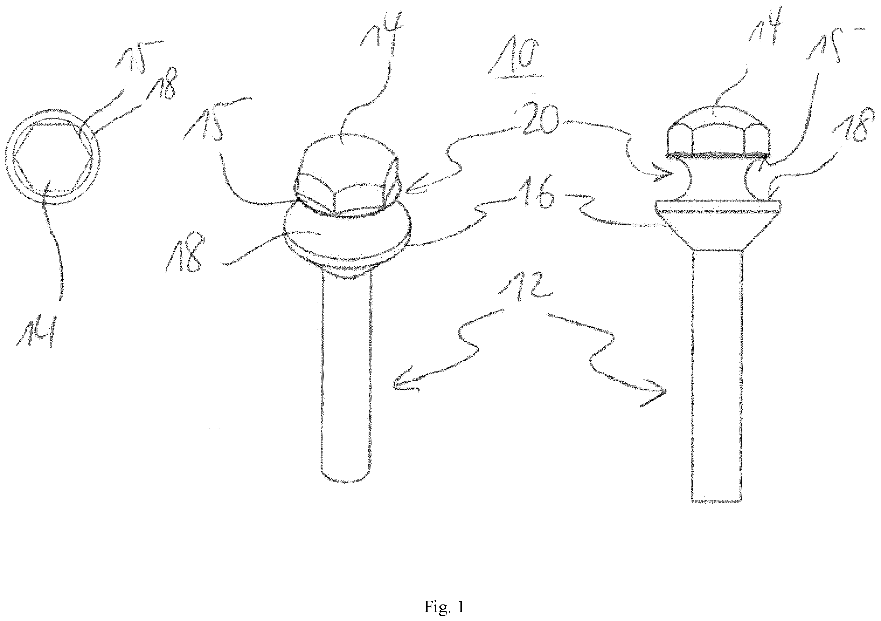

Die mittlere Zeichnung von Fig. 1 zeigt perspektivisch eine erfindungsgemäße Schraube 10 mit einem Kunststoffgewinde 12, einem 90°-Senkteil 16, einem Außen-Sechskantkopf 14 als Werkzeugschnittstelle und einer zwischen der kreisförmigen Grundfläche 18 des Senkteils 16 und der kreisförmig ausgebildeten Unterseite 15 des Außen-Sechskantkopfes 14 vorgesehenen Nut 20 zur Aufnahme und Lagerung eines O-Rings (O-Ring-Nut). In der linken Zeichnung von Fig. 1 ist der Außen-Sechskantkopf 14 in einer Draufsicht gezeigt. Hier ist gut zu erkennen, dass der Durchmesser der Grundfläche 18 des Senkteils 16 etwas größer als der Durchmesser der Unterseite 15 des Kopfes 14 ist. Demensprechend muss der Bohrdurchmesser eines Schaltgerätegehäuses zumindest dem Durchmesser der Grundfläche 18 entsprechen, ist aber aufgrund von Toleranzen typischerweise etwas größer. In der rechten Zeichnung von Fig. 1 ist die Schraube 10 nochmals in einer Seitenansicht gezeigt.

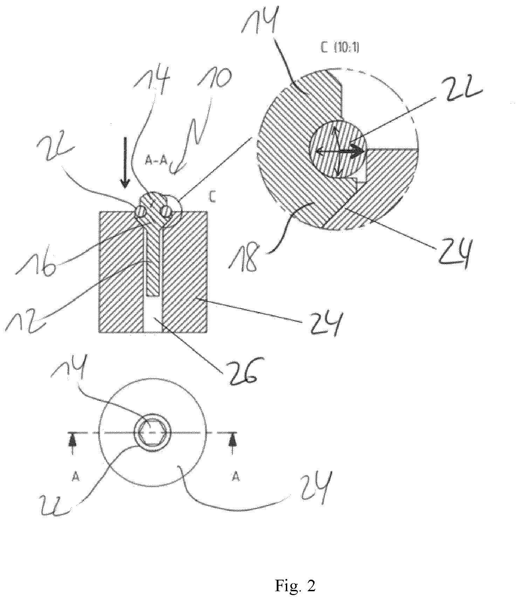

Fig. 2 zeigt eine Schnittdarstellung entlang der Linie A-A der in der Zeichnung unten in Fig. 2 in einer Draufsicht gezeigten Schraube 10 in einem Zustand, in dem sie in eine Senkkopf-Bohrung 26 in einem Gehäuseteil 24 eingeschraubt ist. Der 90°-Senkteil 16 setzt im Senkteil-Abschnitt des Senklochs im Gehäuseteil 24 auf und fixiert damit eine feste Position der Schraube 10 im Gehäuseteil 24. Somit ergibt sich für den O-Ring 22 ebenso eine fixierte Position in Bezug auf das Gehäuseteil 24, und der Druck, der auf das Elastomer des O-Rings 22 lastet, ist somit kontrolliert bzw. definiert, wie beispielsweise gemäß einem Standard gefordert.

In der Detailansicht rechts oben in Fig. 2 ist der auf das Elastomer des O-Rings 22 erzeugte Druck gezeigt, der insbesondere durch die Lage der Nut zwischen Kopf 14 und Senkkopf 18 sowie die Ausgestaltung der Nut und des O-Rings 22 definiert ist und entsprechend bemessen sein kann, um eine gewünschte Abdichtungswirkung zu erzielen. Anders als bei sonst üblichen Abdichtungen wirkt hier die Hauptdichtkraft in einer Richtung etwa 90° zur Einschraubrichtung der Schraube 10 und ist daher von der Anzugkraft der Schraube 10 im Wesentlichen unabhängig. Hierdurch kann die Kompression der Dichtung des O-Rings 22 begrenzt und somit eine Schädigung der Elastomer-Struktur des O-Ring 22 verhindert werden, die zu einem Verlust des Kontaktdrucks und damit der Dichtwirkung führen kann. Die geometrische Ausführung und Größe der Nut 20 (Fig. 1) für den O-Ring 22 und die Größe des O-Rings 22 können so gewählt werden, dass abhängig von der Härte des Elastomers des O-Rings 22 eine möglichst gute Abdichtung erzielt wird. Beispielsweise kann die Gestaltung von Nut 20 und O-Ring 22 so gewählt sein, dass sich bei einem O-Ring aus Gummi mit 70°-Shore-Härte eine Komprimierung des O-Rings von 15% im eingeschraubten Zustand der Schraube erfolgt, da eine solche Komprimierung normgemäß sicher gegen Bakterien abdichten kann.

Die erfindungsgemäßen Schraube kann aufgrund ihrer Ähnlichkeiten zu herkömmlichen Senkkopfschrauben diese ersetzen, wenn das Senkloch in einem Gehäuseteil und/oder die Abmessungen von Senkteil und Nut der erfindungsgemäßen Schraube derart bemessen sind, dass eine Abdichtungsfunktion gewährleistet ist, d.h. ein in der Nut der Schraube gelagerter O-Ring die Kante Oberfläche-Senkloch des Gehäuseteils abdichten kann.

Die Kopfhöhe des Außen-Sechskantkopfes, der im Prinzip von seiner Formgröße standardmäßig ausgestaltet sein kann, kann etwas geringer als die Standard-Kopfhöhe sein, insbesondere kann der Kopf flacher ausgeführt sein, damit der Kopf nicht so weit aus einem Gehäuse hervorsteht, aber dennoch eine ausreichenden Ansatz- und Angriffspunkt für ein Werkzeug zum Einschrauben bietet. Die abgerundete Kopfoberfläche - siehe Fig. 1 rechte Zeichnung - erleichtert und begünstigt zudem die Reinigung des Kopfes der in einem Gehäuse eingeschraubten Schraube.

Da sich bei der erfindungsgemäßen Schraube die Dichtstellen so nahe wie möglich am Außenbereich von zu befestigenden Teilen, insbesondere von Gehäuseteilen, befinden, kann eine akzeptable Reinigbarkeit eines verschraubten Gehäuses auch im Bereich der Verschraubung weitgehend ohne Ablagerungsmöglichkeiten für Schmutzpartikel gewährleistet werden.

Es folgen noch einige Hinweise zu möglichen Ausgestaltungen der erfindungsgemäßen Schraube: das Gewindeteil der Schraube kann metrisch oder für Kunststoff ausgebildet sein. Die erfindungsgemäße Schraube kann so gestaltet sein, dass sie in denselben Bauraum wie eine herkömmliche Standardschraube passt und die Schutzart des Gehäuses an der Verschraubungsstelle erhöhen kann sowie einen einfachen Austausch herkömmlicher Standard-Schrauben ermöglicht. Der Schraubenkopf kann allen Hygieneanforderungen des Anwendungsbereichs entsprechen, wie sie in einer Norm erläutert sind, und hierzu so ausgestaltet sein, dass er keine Spalte aufweist, eine leichte Reinigbarkeit ermöglicht, eine passende Schnittstelle zur O-Ring-Dichtung und zu einem Befestigungswerkzeug (Schlüssel, Nuss) aufweist. Der Einbau des O-Rings ist so ausgeführt, dass alle Dichtstellen nahe der Oberfläche des zu verschraubenden (Gehäuse-)Teils liegen und sich dadurch eine nahezu geschlossene Oberfläche vom Schraubenkopf bis zur Oberfläche des (Gehäuse-)Teils ergibt, ohne Unterbrechung durch Spalte und scharfe Kanten. Die Kompression der O-Ring-Dichtung wird begrenzt und ist unabhängig von der Anzugkraft, da die Haupt-Dichtkraft etwa 90° quer zur Einschraubrichtung wirkt. Bei jeder Einbaulage ist ein Ablaufen von Flüssigkeiten möglich und eine leichte Reinigbarkeit gewährleistet. Es besteht keine Einschränkung der Einbaulage. Die verwendeten Materialien können so gewählt werden, dass die für den beabsichtigten Einsatzbereich zugelassen sind, beispielsweise für den Lebensmittelbereich. Beispielsweise kann die Schraube aus einem geeigneten Edelstahl einstückig gefertigt sein und die Dichtung, insbesondere ein O-Ring kann aus einem konformen Elastomer hergestellt sein. Fett zur weiteren Abdichtung wird nicht benötigt. Der nach außen freiliegende Teil der Dichtung kann relativ gering ausfallen und nur etwa ein Viertel des gesamten Dichtungsoberfläche betragen, wodurch eine möglichst kleine Angriffsfläche für Fremdstoffe wie z.B. Reinigungsmittel oder Umwelteinflüsse geschaffen wird. Die aus der Oberfläche des zu verschraubenden (Gehäuse-)Teils vorstehende Teil der Schraube kann in den Abmessungen so klein gehalten werden, dass durch Verletzungen vermieden, aber die notwendige Anzugkraft zum Einschraube noch gut übertragen werden kann.

### Bezugszeichen

- 10: Schraube
- 12: Kunststoffgewinde
- 14: Außen-Sechskantkopf
- 15: kreisförmige Unterseite des Außen-Sechskantkopfes 14
- 16: 90°-Senkteil
- 18: kreisförmige Grundfläche des Senkteils 16
- 20: Nut zur Aufnahme einer O-Ring-Dichtung
- 22: O-Ring
- 24: Gehäuseteil
- 26: Senkkopf-Bohrung

## Patentansprüche

1. Schraube (10), insbesondere für Gehäuse (100), die
- einen länglichen, zumindest teilweise mit einem Gewinde versehenen Abschnitt (12) und
- einen Schraubenkopf (14) aufweist, wobei
- zwischen dem Schraubenkopf (14) und dem länglichen Abschnitt (12) ein konisch geformter Abschnitt (16) angeordnet ist, wobei der konische Abschnitt (16) sich mit seiner Spitze an einem Ende des länglichen Abschnitts (12) anschließt und die Unterseite (15) des Schraubenkopfes (14) gegenüber der der Grundfläche (18) des konischen Abschnitts (16) angeordnet ist, wobei
- zwischen der Unterseite (15) des Schraubenkopfes (14) und der Grundfläche (18) des konischen Abschnitts (16) eine Nut (20) zur Aufnahme einer Dichtung derart vorgesehen ist, dass die Dichtung unmittelbar unter dem Schraubenkopf so platziert werden kann, dass im eingeschraubten Zustand der Schraube nahezu unmittelbar unter dem Schraubenkopf eine Abdichtung zwischen der Unterseite des Schraubenkopfes und einem Gehäuse bewirkbar ist und somit keine Spalte und Vertiefungen im Gehäuse für Ablagerungen verbleiben, **gekennzeichnet dadurch, dass**
- der Durchmesser der Grundfläche (18) des konisch geformten Abschnitts (16) größer als der Aussendurchmesser des Schraubenkopfes (14) ist.

2. Schraube nach Anspruch 1, **dadurch gekennzeichnet, dass** die Dichtung als O-Ring ausbildbar ist.

3. Schraube nach einem der vorhergehenden Ansprüche, **dadurch gekennzeichnet, dass** der Schraubenkopf (14) und der konisch geformte Abschnitt (16) einstückig ausgebildet sind und aus einem Metall bestehen.

4. Schraube nach einem der vorhergehenden Ansprüche, **dadurch gekennzeichnet, dass** sie einstückig ausgebildet ist und aus einem Metall besteht.

5. Schraube nach einem der Ansprüche 1 bis 3, **dadurch gekennzeichnet, dass** das Gewinde des länglichen Abschnitts (12) eine für Kunststoff besonders geeignete Gewinde-Form aufweist.

6. Schraube nach einem der vorhergehenden Ansprüche, **dadurch gekennzeichnet, dass** der Schraubenkopf (14) als Außen-Mehrkantkopf mit ausschließlich abgerundeten Kanten und einer gewölbten Kopfoberfläche ausgebildet sein.

7. Schraube nach einem der vorhergehenden Ansprüche, **dadurch gekennzeichnet, dass** die Nut (20) derart bemessen ist, dass höchstens ein Viertel der Oberfläche der aufzunehmenden Dichtung freilegbar ist.

8. Schraube nach einem der vorhergehenden Ansprüche, **dadurch gekennzeichnet, dass** die Dimensionierung und Ausformung der Nut (20) derart an eine aufzunehmende Dichtung angepasst ist, dass abhängig von der Härte des Dichtungsmaterials der Kontaktdruck, der bei der in eine Schraubenöffnung eingeschraubten Schraube auf die Dichtung ausgeübt wird, die Dichtung nur so stark komprimiert, dass bei einer vorgegebenen Dichtwirkung keine Schädigung der Dichtung erfolgt.

9. Schraube nach einem der vorhergehenden Ansprüche, **dadurch gekennzeichnet, dass** der konisch geformte Abschnitt (16) einen Öffnungswinkel von ca. 90° besitzt.

10. Schraube nach einem der vorhergehenden Ansprüche, **dadurch gekennzeichnet, dass** sie aus Materialien gefertigt ist, die vorgegebenen Hygieneanforderungen entsprechen, insbesondere aus Edelstahl und Hygiene-konformen Elastomer

## Claims

1. Screw (10), in particular for housings (100), comprising
- an elongate portion (12) that is at least partially provided with a thread and
- a screw head (14), wherein
- a conically shaped portion (16) is arranged between the screw head (14) and the elongate portion (12), wherein the conical portion (16) is joined at its tip to one end of the elongate portion (12) and the underside (15) of the screw head (14) is arranged opposite that of the base surface (18) of the conical portion (16), wherein
- a groove (20) for receiving a seal is provided between the underside (15) of the screw head (14) and the base surface (18) of the conical portion (16) in such a way that the seal can be placed directly under the screw head in such a way that when the screw is screwed in, a seal can be created between the underside of the screw head and a housing almost directly under the screw head so that no gaps or depressions remain in the housing for deposits, **characterised in that**
- the diameter of the base surface (18) of the conically shaped portion (16) is greater than the outer diameter of the screw head (14).

2. Screw according to claim 1, **characterised in that** the seal can be formed as an O-ring.

3. Screw according to any one of the preceding claims, **characterised in that** the screw head (14) and the conically shaped portion (16) are formed in one piece and consist of a metal.

4. Screw according to any one of the preceding claims, **characterised in that** it is formed in one piece and consists of a metal.

5. Screw according to any one of claims 1 to 3, **characterised in that** the thread of the elongate portion (12) has a thread form that is particularly suitable for plastics material.

6. Screw according to any one of the preceding claims, **characterised in that** the screw head (14) is formed as an externally polygonal head with entirely rounded edges and a domed head surface.

7. Screw according to any one of the preceding claims, **characterised in that** the groove (20) is dimensioned such that at most a quarter of the surface of the seal that is to be received is exposed.

8. Screw according to any one of the preceding claims, **characterised in that** the dimensioning and shaping of the groove (20) are adapted to a seal that is to be received in such a way that, depending on the hardness of the sealing material, the contact pressure which is exerted on the seal when the screw is screwed into a screw opening for a predetermined sealing effect compresses the seal only to such an extent that the seal is not damaged.

9. Screw according to any one of the preceding claims, **characterised in that** the conically shaped portion (16) has an opening angle of approximately 90°.

10. Screw according to any one of the preceding claims, **characterised in that** it is made of materials that meet specified hygiene requirements, in particular stainless steel and hygiene-conforming elastomer.

## Revendications

1. Vis (10), en particulier pour un boîtier (100), qui
- présente une section oblongue (12), au moins partiellement pourvue d'un filetage et
- une tête de vis (14), dans laquelle
- une section de forme conique (16) est agencée entre la tête de vis (14) et la section oblongue (12), dans laquelle la section conique (16) se connecte avec sa pointe au niveau d'une extrémité de la section oblongue (12) et la face inférieure (15) de la tête de vis (14) est agencée à l'opposé de la surface de base (18) de la section conique (16), dans laquelle
- une rainure (20) est prévue entre la face inférieure (15) de la tête de vis (14) et la surface de base (18) de la section conique (16) pour accueillir un joint de sorte que le joint puisse être placé directement sous la tête de vis de sorte qu'une étanchéité puisse être provoquée entre la face inférieure de la tête de vis et un boîtier dans l'état vissé de la vis presque directement sous la tête de vis et qu'aucune fente ou cavité ne puisse donc demeurer dans le boîtier pour les dépôts, **caractérisée en ce que**
- le diamètre de la surface de base (18) de la section de forme conique (16) est supérieur au diamètre extérieur de la tête de vis (14).

2. Vis selon la revendication 1, **caractérisée en ce que** le joint peut être réalisé comme un anneau en O.

3. Vis selon l'une quelconque des revendications précédentes, **caractérisée en ce que** la tête de vis (14) et la section de forme conique (16) sont réalisées en une seule pièce et consistent en un métal.

4. Vis selon l'une quelconque des revendications précédentes, **caractérisée en ce qu'**elle est réalisée en une seule pièce et consiste en un métal.

5. Vis selon l'une quelconque des revendications 1 à 3, **caractérisée en ce que** le filetage de la section oblongue (12) présente une forme de filetage particulièrement adaptée au plastique.

6. Vis selon l'une quelconque des revendications précédentes, **caractérisée en ce que** la tête de vis (14) est réalisée comme une tête polygonale vers l'extérieur avec des bords exclusivement arrondis et une surface de tête courbée.

7. Vis selon l'une quelconque des revendications précédentes, **caractérisée en ce que** la rainure (20) est dimensionnée de sorte que maximum un quart de la surface du joint devant être reçue puisse être dégagé.

8. Vis selon l'une quelconque des revendications précédentes, **caractérisée en ce que** le dimensionnement et le façonnement de la rainure (20) sont adaptés à un joint devant être reçu de sorte que, en fonction de la dureté du matériau de joint, la pression de contact qui est exercée sur le joint par la vis vissée dans une ouverture de vis ne comprime le joint que dans une mesure telle qu'aucune dégradation du joint n'ait lieu pour un effet d'étanchéité prédéterminé.

9. Vis selon l'une quelconque des revendications précédentes, **caractérisée en ce que** la section de forme conique (16) dispose d'un angle d'ouverture d'environ 90°.

10. Vis selon l'une quelconque des revendications précédentes, **caractérisée en ce qu'**elle est fabriquée à partir de matériaux qui sont conformes aux exigences d'hygiène prédéterminées, en particulier en acier inoxydable et élastomère conformes en ce qui concerne l'hygiène.
